# EUROPÄISCHE PATENTSCHRIFT

(11) **EP 3 075 909 B1**
(45) Veröffentlichungstag und Bekanntmachung des Hinweises auf die Patenterteilung: **06.09.2017**
(21) Anmeldenummer: 15161661.2
(22) Anmeldetag: 30.03.2015
(51) Int. Cl.: E01C 19/48

(54) **STRASSENBAUMASCHINE MIT NETZWERK ZUR DATENÜBERTRAGUNG UND VERWENDUNG EINES TEILS EINER STROMLEITUNG**
ROAD CONSTRUCTION MACHINE WITH NETWORK FOR DATA TRANSMISSION AND USE OF A PORTION OF A POWER LINE
ENGIN DE CONSTRUCTION DE ROUTE DOTÉ D'UN RÉSEAU DE COMMUNICATION POUR LA TRANSMISSION DE DONNÉES ET UTILISATION D'UNE PARTIE D'UNE LIGNE D'ALIMENTATION

(43) Veröffentlichungstag der Anmeldung: 05.10.2016
(73) Patentinhaber: Joseph Vögele AG, 67075 Ludwigshafen (DE)
(72) Erfinder: EUL, Achim, 68305 Mannheim (DE); HEINDTEL, Michael, 68199 Mannheim (DE)
(74) Vertreter: Grünecker Patent- und Rechtsanwälte PartG mbB

(56) Entgegenhaltungen:
- EP-A1- 2 333 158

## Beschreibung

Die Erfindung bezieht sich auf eine Baumaschine mit einem Netzwerk zur Datenübertragung gemäß dem Oberbegriff des Anspruchs 1. Weiterhin betrifft die Erfindung die Verwendung eines Teils einer Stromleitung einer Baumaschine zur Datenübertragung gemäß dem unabhängigen Anspruch 16. Eine solche Maschine ist aus der EP2333158A1 bekannt. In der Praxis werden selbstfahrende Straßenfertiger verwendet, um neue Fahrbahndecken herzustellen. Solche Straßenfertiger sind gewöhnlich mit einem Gutbunker ausgestattet, der zur Aufnahme von Einbaugut vorgesehen ist. Das Einbaugut wird mittels einer Fördervorrichtung während der Einbaufahrt zu einer am Straßenfertiger befestigten Einbaubohle transportiert, welche das Einbaumaterial zu einer neuen Straßenbelagschicht verarbeitet.

Moderne Einbaubohlentypen umfassen eine Vielzahl elektrischer sowie hydraulischer Verbraucher. Beispielsweise können auf der Einbaubohle elektrische Bohlenheizeinheiten, umfassend eine Vielzahl von Heizstäben, vorliegen, welche von einem Generator des Straßenfertigers über eine Stromleitung insbesondere mit Wechselstrom versorgt werden. Der Generator wird vorzugsweise von einem Verbrennungsmotor des Straßenfertigers, meist einem Dieselmotor angetrieben. Ferner können auf der Einbaubohle insbesondere hydraulische Tamperhubverstelleinheiten, hydraulische ansteuerbare Bohlenausziehteile zur Verbreiterung der Arbeitsfläche sowie, ohne darauf beschränkt zu sein, hydraulisch verstellbare Seitenschieber vorgesehen sein.

Außerdem gibt es bereits jetzt eine Vielzahl elektrischer und hydraulischer Komponenten auf der Einbaubohle, die in ein Datennetzwerk des Straßenfertigers funktional eingebunden sind und die mittels eines Steuermoduls, das insbesondere auf dem Bedienstand des Straßenfertigers angeordnet ist, angesteuert werden können. Alternativ oder zusätzlich können die elektrischen und/oder hydraulischen Einheiten der Einbaubohle auch von einem Bohlenbedienstand aus, der direkt, vorzugsweise seitlich, an der Einbaubohle angeordnet ist, angesteuert werden.

Allerdings hat es sich gezeigt, dass durch die zunehmende Anzahl elektrischer sowie hydraulischer Komponenten/Verbraucher auf der Einbaubohle neben dem Installationsaufwand für die Stromversorgung auch die Komplexität der dafür zur Überwachung und Ansteuerung eingesetzten Datenkabel entsprechend zunimmt. Dadurch werden vor allem die Herstellungskosten in die Höhe getrieben, wobei ebenfalls Instandsetzungsarbeiten am Straßenfertiger komplizierter werden.

Im Hinblick auf die oben genannten Herausforderungen ist es die Aufgabe der vorliegenden Erfindung, eine Baumaschine mittels einfacher, technischer konstruktiver Merkmale dahingehend zu verbessern, dass trotz der an ihr vorliegenden zunehmenden Komplexität funktionaler Einheiten Funktionskomponenten unter reduziertem Datenkabeleinsatz für eine robuste und zuverlässige Datenübertragung an einem Netzwerk des Straßenfertigers angeschlossen werden können. Aufgabe der Erfindung ist es auch, eine diesbezügliche Verwendung für eine Baumaschine zu schaffen.

Diese Aufgabe wird gelöst durch eine Baumaschine mit den Merkmalen des Anspruchs 1. Weiter wird diese Aufgabe gelöst durch eine Verwendung mit den Merkmalen des unabhängigen Anspruchs 16. Vorteilhafte Weiterbildungen der Erfindung sind in den Unteransprüchen angegeben.

Die Erfindung betrifft eine Baumaschine mit einer Einbaubohle zum Verbau eines Straßenbelags. Die Baumaschine ist als selbstfahrender Straßenfertiger ausgebildet und umfasst mindestens eine Stromleitung zur Stromversorgung mindestens eines elektrischen Verbrauchers der Einbaubohle.

Ferner umfasst die Baumaschine ein Netzwerk für eine Datenübertragung zwischen mindestens einem im Netzwerk eingebundenen Sender und mindestens einem im Netzwerk eingebundenen Empfänger. Dabei ist der Sender insbesondere dazu ausgebildet, mindestens eine Art von Betriebsparameter des Straßenfertigers über das Netzwerk an den Empfänger zu senden.

Erfindungsgemäß ist zumindest ein Abschnitt der Stromleitung in das Netzwerk eingebunden und zur Datenübertragung zwischen dem Sender und dem Empfänger konfiguriert.

Demzufolge wird bei der Erfindung die ohnehin auf dem Straßenfertiger vorliegende Stromleitung zur Stromversorgung mindestens eines elektrischen Verbrauchers auf der Einbaubohle zumindest abschnittsweise in dem Netzwerk zur Datenübertragung zwischen darin angeschlossener Aktuatoren als integraler funktionaler Teil eingebunden. Das Netzwerk, welches bei der Erfindung zur Datenübertragung zwischen dem Sender und dem Empfänger verwendet wird, nutzt daher mindestens einen Abschnitt der Stromleitung zur Datenübertragung. Folglich hat dieser gemeinsam von der Stromleitung und dem Netzwerk benutzte Abschnitt die Doppelfunktion, sowohl Strom zum Verbraucher zu leiten, als auch zur Datenübertragung im Netzwerk eingesetzt zu werden.

Dadurch, dass bei der Erfindung ein Teil der Versorgungsleitung selbst als Kommunikationsabschnitt für die die Datenverbindung vorliegt, können die oberen im Zusammenhang mit dem Stand der Technik beschriebenen Nachteile auf ein Mindestmaß reduziert werden, weil insbesondere Instandsetzungsarbeiten leichter werden und auch der Herstellungsaufwand, insbesondere bei der Montage des Straßenfertigers, verringert wird.

Vorzugsweise ist der elektrische Verbraucher eine Bohlenheizvorrichtung der Einbaubohle, die über die Stromleitung mit einem Generator der Baumaschine verbunden ist. Die Bohlenheizvorrichtung ist dazu konfiguriert, Teile der Einbaubohle vor oder während des Verbaus von Einbaumaterial auf eine vorbestimmte Temperatur zu bringen sowie diese ggf. daran während des Verbaus zu halten, sodass an den erwärmten Teilen der Einbaubohle das Einbaumaterial nicht kleben bleibt. Vorzugsweise umfasst die Bohlenheizvorrichtung eine Vielzahl von Heizstäben, die an den zu erwärmenden Teilen befestigt sind.

Der Generator ist insbesondere zur Erzeugung von Wechselstrom mit einer Spannung von 230 V oder 400 V sowie 50 oder 60 Hz konfiguriert. Den Wechselstrom speist der Generator in ein Stromversorgungsnetz des Straßenfertigers ein, in welchem insbesondere die Stromleitung für die Einbaubohle eingebunden ist.

Vorzugsweise umfasst oder ist der im Netzwerk eingebundene Sender ein auf der Einbaubohle angeordneter Mikroprozessor, der mit dem Abschnitt der Stromleitung, beispielsweise durch einen Adapter, funktional verbunden ist und dazu konfiguriert ist, mindestens einen Betriebsparameter der Einbaubohle, vorzugsweise einen Verschleißzustand eines (An-)Bauteils der Einbaubohle, auf eine Trägerfrequenz zu modulieren und die Trägerfrequenz samt dem aufmodulierten Betriebsparameter über den Abschnitt der Stromleitung an den Empfänger zu senden. Dabei kann sich der Betriebsparameter insbesondere auf eine Temperatur, einen Druckwert, eine Drehzahl, einen Verstellweg, einen Bewegungsablauf, ein Gewicht, eine Kraft und/oder eine Abstandsmessung beziehen, der insbesondere während der Einbaufahrt manuell oder automatisch einstellbar ist.

Der Mikroprozessor ist insbesondere dazu konfiguriert, den mindestens einen Betriebsparameter als Datensignal mit dem Trägersignal zu synchronisieren, wobei der Mikroprozessor insbesondere die an der Stromleitung anliegende Wechselspannung als Trägersignal/Trägerfrequenz für seine Datenübertragung nutzt.

Vorzugsweise ist der Mikroprozessor dazu konfiguriert, mittels Puls-Phasen-Modulation das Datensignal auf das Trägersignal aufzumodulieren. Das Modulationsverfahren ermöglicht eine robuste Datenübertragung, die störunauffällig ist. Ferner lässt sich das Datensignal in der Praxis ohne Filter oder Verstärker entlang des Netzwerks zuverlässig zum Empfänger des Straßenfertigers übertragen.

Gemäß einer weiteren Ausführungsform der Erfindung ist der Mikroprozessor an einer zur Einbaubohle gehörenden und lösbar an der Einbaubohle befestigten Funktionskomponente verbaut oder mindestens dieser funktional zugeordnet, wobei der Mikroprozessor dazu ausgebildet ist, mindestens einen Betriebsparameter der Funktionskomponente auf eine Trägerfrequenz zu modulieren und die Trägerfrequenz samt dem aufmodulierten Betriebsparameter über den Abschnitt der Stromleitung an den Empfänger zu senden. Diese Variante betrifft insbesondere eine erweiterbare Einbaubohle mit daran an- und abmontierbar befestigten Funktionskomponenten, die als Anbauteile für eine bestimmte Funktion an der Einbaubohle zum Einsatz kommen. Das Netzwerk zur Datenübertragung des Straßenfertigers ist vorzugsweise auf eine beliebige Anzahl daran angeschlossener Anbauteile erweiterbar, wobei die Art und Anzahl der lösbar anmontierten funktionalen Anbauteile vom Einsatzort sowie vom Einsatzzweck der Einbaubohle abhängen kann.

Die Funktionskomponente könnte beispielsweise eine Bohlenheizvorrichtung, ein auf der Einbaubohle verbauter Schrittmotor, ein hydraulischer Verstellzylinder, ein Seitenschieber, ein Verbreiterungsteil, d.h. ein Ausziehteil der Einbaubohle, ein Sensor, ein Glättblech und/oder eine Tamperhubeinheit sein.

Vorzugsweise ist der Empfänger dazu konfiguriert, die Funktionskomponente zu identifizieren, wenn die Funktionskomponente an der Einbaubohle befestigt ist. Hierfür könnte der Mikroprozessor dazu konfiguriert sein, ein Andocksignal zu erzeugen und dieses über das Netzwerk an den Empfänger zu senden, sobald die Funktionskomponente an der Einbaubohle anmontiert wird. Der Empfänger weiß daher Bescheid, welche Funktionskomponenten an das Netzwerk angeschlossen sind. Diesbezüglich könnte der Empfänger dazu konfiguriert sein, den Typen der angeschlossenen Funktionskomponente zu erfassen. Ferner kann darauf basierend vom Empfänger vorzugsweise ein bestimmter auf die Funktionskomponente abgestimmter Betriebsmodus aktiviert werden.

Hilfreich ist es auch, wenn der Mikroprozessor über einen Betriebsstundenzähler verfügt, der dazu konfiguriert ist, eine Einsatzzeit des Mikroprozessors und/oder der Funktionskomponente an der Einbaubohle aufzunehmen. Anhand der Einsatzzeit des Betriebsstundenzählers lassen sich insbesondere Verschleißerscheinungen ableiten, sodass dem Netzwerk des Straßenfertigers über den Mikroprozessor Informationen darüber vorliegen, wann ggf. mit einem Austausch einer Funktionskomponente der Einbaubohle zu rechnen ist. Weiter kann der Mikroprozessor dazu ausgebildet sein, ab einem erreichten Wert abgelaufener Betriebsstunden einer Funktionskomponente zumindest intervallweise ein Servicesignal zu generieren, um damit unter Verwendung des Netzwerks einen Bediener des Straßenfertigers rechtzeitig darauf hinzuweisen, dass in Kürze mit einem Austausch bzw. mit einer Instandsetzung der verbrauchten Funktionskomponente zu rechnen ist.

Bei einer anderen Variante der Erfindung umfasst der Mikroprozessor mindestens einen Temperatursensor zum Erfassen einer Betriebstemperatur an der Einbaubohle. Der Temperatursensor kann beispielsweise dazu ausgelegt sein, die Temperatur eines Bohlenglättblechs, einer hydraulischen Leitung, eines Heizstabs, einer Tamperleiste und/oder eines Seitenschiebers zu erfassen. Dies ist zweckmäßig, um die Funktionalität der jeweiligen Komponenten zu erhalten sowie ggf. zu verhindern, dass an den Teilen Einbaugut kleben bleibt.

Vorzugsweise umfasst die Einbaubohle eine Heizstabüberwachungseinheit, in welcher der Mikroprozessor integral eingebaut ist. Die Heizstabüberwachungseinheit ist vorzugsweise mit sämtlichen in der Einbaubohle verbauten Heizstäben funktional verbunden und dazu konfiguriert, einen Betriebszustand der Heizstäbe, insbesondere eine Betriebstemperatur daran, zu überwachen. Vorzugsweise umfasst die Heizstabüberwachungseinheit eine Vielzahl von Leuchten, die den jeweiligen Heizstäben zugeordnet sind, wobei ein Bediener anhand der Leuchten visuell erkennen kann, ob und welche Heizstäbe der Einbaubohle in Betrieb sind. Um die Funktionalität der Heizstabüberwachungseinheit zu verbessern, kann diese über den in ihr integral ausgebildeten Mikroprozessor an das Netzwerk zur Datenübertragung angeschlossen sein. Die vom Mikroprozessor aus versendeten Datensignale in das Netzwerk des Straßenfertigers ermöglichen es, zusätzlich oder alternativ zur Überwachung der Heizstäbe anhand der direkt an der Heizstabüberwachungseinheit eingesetzten Leuchten, eine Überwachung der Heizstäbe über das Netzwerk, insbesondere am daran angeschlossenen Empfänger durchzuführen.

Gemäß einer weiteren Ausführungsform weist die Funktionskomponente und/oder der daran verbaute Mikroprozessor einen Fehlerspeicher auf, wobei der Mikroprozessor dazu ausgebildet ist, eine Fehlfunktion an der Einbaubohle, insbesondere an der Funktionskomponente zu erfassen und die Fehlfunktion in dem Fehlerspeicher abzuspeichern. Als Fehlfunktion kann ein Überschreiten und/oder Unterschreiten eines bestimmten Betriebsparameters gemeint sein, welcher eigentlich an der Funktionskomponente anliegen sollte. Ebenso könnte die Fehlfunktion einen zumindest temporär vorliegenden Ausfall der Funktionskomponente bedeuten. Insbesondere handelt es sich bei dem Fehlerspeicher um einen RFID-Tag.

Vorzugsweise generiert der Mikroprozessor ab Erreichen einer bestimmten Anzahl an Fehlermeldungen auf dem Fehlerspeicher ein Warnsignal, das über das Netzwerk zur Datenübertragung insbesondere an den Empfänger weitergeleitet wird. Vorstellbar ist es auch, dass der Mikroprozessor dazu ausgebildet ist, mit einem tragbaren Fehlerspeicherlesegerät zu kommunizieren, wobei damit zu jeder Zeit, d.h. sowohl im an- als auch im abgebauten Zustand der Funktionskomponente an der Einbaubohle, die auf dem Fehlerspeicher abgelegten Fehlermeldungen der Funktionskomponente auslesbar sind.

Vorzugsweise ist der Fehlerspeicher und/oder Mikroprozessor an der Funktionskomponente auch nach Abnehmen von der Einbaubohle, z.B. auf dem Bauhof, stromlos auslesbar ist.

Vorzugsweise ist der Fehlerspeicher, insbesondere der RFID-Tag, derart konfiguriert, dass er bei einem entkoppelten stromlosen Zustand der Funktionskomponente von der Einbaubohle, wobei es sich insbesondere bei der Funktionskomponente um einen Sensor, ein Bediengerät und/oder ein anderes Bohlenanbauteil handelt, von dem Fehlerspeicherlesegerät auslesbar ist. Insbesondere lassen sich dabei Statusinformationen, beispielsweise Fehlerzustände und/oder Betriebsstunden der Funktionskomponente, auslesen.

Weiter kann der Fehlerspeicher, insbesondere der RFID-Tag, dazu konfiguriert sein, während des normalen an der Einbaubohle befestigten Betriebs der Funktionskomponente automatisch Statusinformationen der Funktionskomponente aufzuzeichnen. Dadurch lässt sich der Betriebsstatus der jeweiligen Funktionskomponente ständig auf dem aktuellsten Stand auf dem Fehlerspeicher festhalten. Im stromlosen Zustand der Funktionskomponente, d.h. nach Verbringung dieser zum Bauhof bzw. vor Verbringung der Funktionskomponente zur nächsten Baustelle, kann insbesondere mittels eines RFID-Handlesegeräts der letzte abgespeicherte Betriebsstatus der Funktionskomponente einfach, vorzugsweise berührungslos, ausgelesen werden. Dies geschieht vorzugsweise ohne Kontakt und Anschluss zwischen der Funktionskomponente an dem RFID-Handlesegerät.

Die zum Auslesen des Speichers benötigte Energie wird dabei vorzugsweise durch eine sogenannte Energie-Harvesting-Methode zwischen dem RFID-Tag und dem RFID-Handlesegerät bereitgestellt. Vorstellbar wäre es auch, dass mittels dieser Methode Daten vom RFID-Handlesegerät in den Fehlerspeicher der Funktionskomponente geschrieben werden, wie z.B. Betriebsparameter, Seriennummer, Servicedaten und/oder andere Daten, die den Betrieb der Funktionskomponente betreffen. Dies kann auch dann geschehen, wenn die Funktionskomponente an der Einbaubohle befestigt ist.

Vorstellbar wäre es auch, dass alternativ oder zusätzlich die auf dem Fehlerspeicher abgespeicherten Statusinformationen der jeweiligen Funktionskomponente über das Netzwerk automatisch oder manuell auf einem Zündschlüssel des Straßenfertigers, der an das Steuermodul angeschlossen ist, abspeicherbar sind. Der Zündschlüssel könnte dann als tragbares Speichermedium eingesetzt werden, von welchem der Bediener von der Baustelle entfernt, beispielsweise in seinem Büro, Statusinformationen, beispielsweise mittels des oben erwähnten RFID-Handlesegerät oder mittels eines anderen Lesegeräts, ausliest und anhand dieser gegebenenfalls einen Austausch von Funktionskomponenten einplanen kann.

Insbesondere lassen sich durch die zuvor in Zusammenhang mit dem Fehlerspeicher assoziierten Merkmale vorteilhaft für die Arbeitsvorbereitung einsetzen, beispielsweise kann vermieden werden, dass defekte Funktionskomponenten zu einer Baustelle gebracht werden und deren Defekt erst dort erkannt wird.

Eine weitere vorteilhafte Variante der Erfindung sieht vor, dass das Netzwerk funktional mit einer Tamperhubverstelleinheit verbunden ist, die über das Netzwerk basierend auf mindestens einem Betriebsparameter der Einbaubohle dynamisch ansteuerbar ist. Vorzugsweise ist die Tamperhubverstelleinheit zeitgleich basierend auf einer Änderung mindestens eines Betriebsparameters der Einbaubohle automatisch verstellbar, sodass die Tamperhubverstelleinheit optimal an die jeweilige Einbausituation anpassbar ist.

Über das Netzwerk lassen sich insbesondere Sollwerte zur Einstellung mindestens eines Schrittmotors der variabel einstellbaren Tamperhubverstelleinheit übertragen, wobei die Sollwerte insbesondere auf Temperaturdaten des Einbaumaterials und/oder der Einbaubohle/Funktionskomponente basieren.

Das Netzwerk kann insbesondere dann die Funktionalität der Baumaschine verbessern, wenn der Empfänger ein Steuermodul der Baumaschine ist, wobei das Steuermodul eine zentrale Bedienvorrichtung auf einem Bedienstand der Baumaschine und/oder eine Bohlenbedienvorrichtung ist, die seitlich an der Einbaubohle angeordnet ist. Vorzugsweise ist das Steuermodul dazu ausgebildet, die über das Netzwerk erhaltenen Daten, beispielsweise mittels eines Displays anzuzeigen. Der Bediener hat somit die Möglichkeit, am Steuermodul, wo er sich gewöhnlich beim Verbau aufhält, Daten des Netzwerks einzusehen.

Vorzugsweise ist die zentrale Bedienvorrichtung und/oder die Bohlenbedienvorrichtung dazu konfiguriert, die durch das Netzwerk empfangenen Datensignale zur Rückkopplung, d.h. zur Ansteuerung der jeweiligen Funktionskomponenten, von welchen die Datensignale stammen, und/oder zur Ansteuerung anderer Funktionskomponenten des Straßenfertigers zu verwenden. Die Datenübertragung über das Netzwerk bildet somit nicht nur eine Basis für eine direkte Rückkopplungssteuerung der ausgelesenen Funktionskomponenten, sondern auch eine Weiterverarbeitung der empfangenen Datensignale zur Ansteuerung anderer Funktionskomponenten des Straßenfertigers, wodurch eine besonders große Vielzahl beliebiger Funktionskomponenten des Straßenfertigers miteinander vernetzt und funktional verbunden sein können.

Vorstellbar ist es auch, dass das Netzwerk zumindest abschnittsweise einen CAN-Bus umfasst, der das Steuermodul zur Datenübertragung mit dem in das Netzwerk eingebundenen Abschnitt der Stromleitung verbindet. Der CAN-Bus könnte eventuell auch eine Verbindung zu anderen Aktuatoren des Straßenfertigers herstellen, um diese mit dem Steuermodul zu verbinden. Der CAN-Busabschnitt leistet eine besonders große Datenübertragungsrate.

Gemäß einer besonderen Ausführung der Erfindung ist das Netzwerk der Baumaschine dazu konfiguriert ist, eine Datenverbindung mit einem externen Netzwerk herzustellen. Das externe Netzwerk kann beispielsweise durch ein anderes Baustellenfahrzeug, insbesondere ein Walzenfahrzeug, ausgebildet sein. Vorstellbar wäre es allerdings auch, dass das externe Netzwerk zu einer zentralen Arbeitsüberwachungsstation gehört, welche dafür bestimmt ist, basierend auf den vom Straßenfertiger ausgesendeten Datensignalen in Zusammenhang mit der Arbeitsvorbereitung, logistische Prozesse, insbesondere Materialversorgungsabläufe und/oder Ersatzteillieferungen an die Baustelle, zu koordinieren.

Vorstellbar wäre es auch, dass die jeweiligen Mikroprozessoren der an der Einbaubohle verbauten Funktionskomponenten des Straßenfertigers dazu ausgebildet sind, intervallweise oder kontinuierlich über das Netzwerk des Straßenfertigers Servicesignale, insbesondere betreffend Verschleißerscheinungen, Fehlermeldungen und/oder Einsatzzeiten der Funktionskomponenten, an das Steuermodul und/oder an das externe Netzwerk zu versenden, sodass Service- sowie Instandsetzungsarbeiten besser zeitlich abgestimmt werden können.

Eine besondere vorteilhafte Funktion bietet die Erfindung dann, wenn das Netzwerk der Baumaschine für eine bidirektionale Datenübertragung ausgelegt ist. Die jeweiligen Mikroprozessoren können dadurch sowohl Datensignale über das Netzwerk versenden, als auch Datensignale über das Netzwerk erhalten, worauf basierend die Mikroprozessoren Einstellungen von mindestens einem Betriebsparameter an der Funktionskomponente beeinflussen und/oder sogar durchführen können. Dadurch ist es möglich, die jeweiligen Mikroprozessoren über das Netzwerk des Straßenfertigers in einen Regelkreis einzubinden, der dazu konfiguriert ist, Ist-Werte der durch die Mikroprozessoren versendeten, in den Datensignalen enthaltenen Betriebsparameter der Funktionskomponenten mit entsprechenden, insbesondere in dem Steuermodul hinterlegten Soll-Werten zu vergleichen, und darauf basierend an die jeweiligen Mikroprozessoren der Funktionskomponenten Datensignale, umfassend mindestens eine Regelgröße, zurückzusenden, um die jeweiligen Funktionskomponenten zu steuern. Dadurch ließe sich die Erfindung in einem automatisierten Regelungssystem des Straßenfertigers funktional einbinden.

Vorstellbar wäre es auch, dass das Netzwerk der Baumaschine für eine unidirektionale Datenübertragung ausgelegt ist. Somit ließen sich problemlos Betriebsparameter, Servicesignale und/oder Warnsignale von den jeweiligen Mikroprozessoren an das Steuermodul des Straßenfertigers versenden.

Weiterhin betriff die Erfindung die Verwendung eines Teils einer Stromleitung, die bei einer als selbstfahrender Straßenfertiger ausgebildeten Baumaschine einen elektrischen Verbraucher einer Einbaubohle des Straßenfertigers mit Strom versorgt, als integraler Teil eines Netzwerks zur Datenübertragung zwischen mindestens einem im Netzwerk eingebundenen Sender und mindestens einem im Netzwerk eingebundenen Empfänger. Als integraler Teil des Netzwerks zur Datenübertragung bildet der Teil der Stromleitung somit eine Doppelfunktion aus, indem er zusätzlich zur Leitung elektrischen Stroms an den elektrischen Verbraucher der Einbaubohle darüber hinaus zur Datenübertragung im Netzwerk des Straßenfertigers eingesetzt wird. Auf Basis der bestehenden Stromleitung können sämtliche Aktuatoren des Netzwerks miteinander datenverbunden sein.

Im Folgenden werden vorteilhafte Ausführungsbeispiele der Erfindung anhand einer Zeichnung näher dargestellt. Im Einzelnen zeigen:
- Figur 1:: eine perspektivische Darstellung eines selbstfahrenden Straßenfertigers gemäß der Erfindung,
- Figur 2:: eine Seitenansicht eines erfindungsgemäßen Straßenfertigers,
- Figur 3:: eine schematische Darstellung des im erfindungsgemäßen Straßenfertiger eingebundenen Netzwerks zur Datenübertragung und
- Figur 4:: eine schematische Darstellung eines Mikroprozessors einer Funktionskomponente.

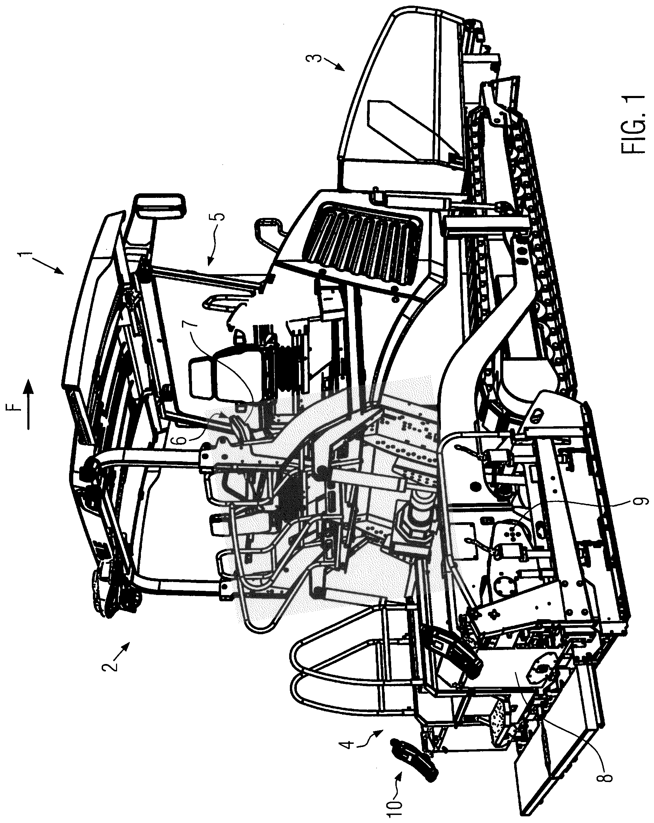

Figur 1 zeigt eine Baumaschine 1, die als selbstfahrender Straßenfertiger 2 ausgebildet ist. Der Straßenfertiger 2 umfasst einen Gutbunker 3 zur Aufnahme von Einbaugut, welches mittels einer hinten am Straßenfertiger 2 beweglich befestigten Einbaubohle 4 zu einer Straßenbelagschicht verbaut wird. Ferner verfügt der Straßenfertiger 2 über einen Bedienstand 5, von welchem aus ein Bediener den Betrieb des Straßenfertigers 2 steuern kann. Zur Steuerung des Straßenfertigers 2 ist für den Bediener auf dem Bedienstand 5 ein Steuermodul 6 vorgesehen, das für den Bediener eine zentrale Bedienvorrichtung 7 bildet, mittels welcher er Betriebsfunktionen des Straßenfertigers 2 sowohl überwachen als auch steuern kann.

Gemäß Figur 1 ist die Einbaubohle 4 als Ausziehbohle ausgebildet, die eine Grundbohle 8 sowie Ausziehbohlenteile 9 umfasst, die relativ zur Grundbohle 8 seitlich zur Fahrtrichtung F gesehen verstellbar sind, um die Einbaubohle 4 hinsichtlich einer gewünschten Einbaubreite für den neuen Straßenbelag einzustellen.

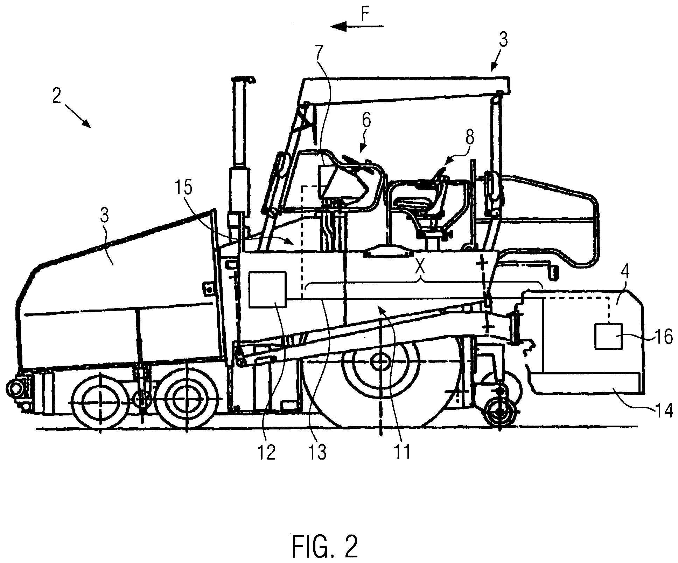

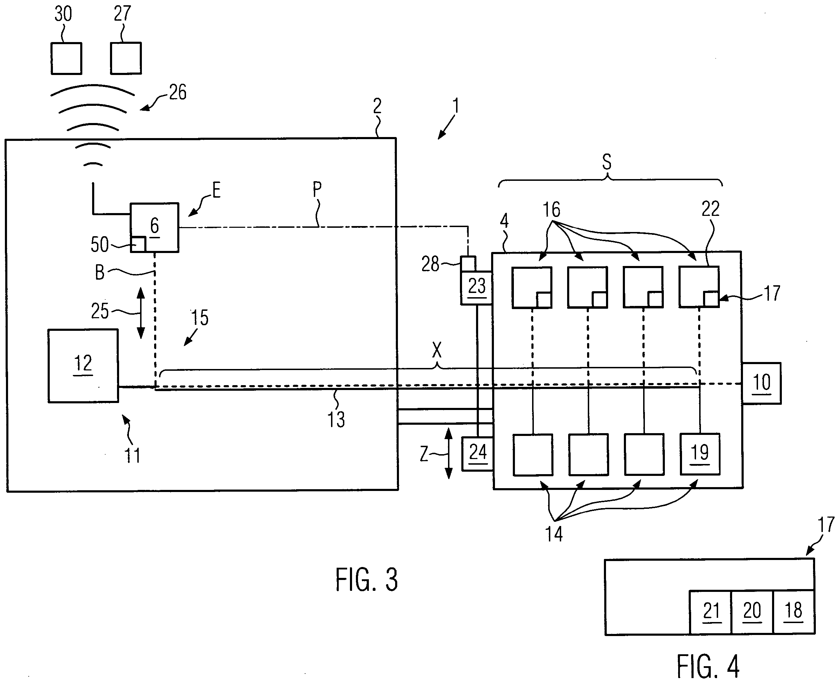

Außerdem zeigt Figur 1, dass links und rechts seitlich an der Einbaubohle 4 zwei Bohlenbedienvorrichtungen 10 angeordnet sind. Die Bohlenbedienvorrichtungen 10 sind dazu konfiguriert, einen Betrieb der Einbaubohle 4, insbesondere den Betrieb daran befestigter Funktionskomponenten 16 (siehe Figuren 2 und 3) zu steuern sowie darauf einem Bediener anzuzeigen, wie eine Vielzahl von Betriebsparametern während des Verbaus an der Einbaubohle 4/den Funktionskomponenten 16 eingestellt sind.

In Figur 1 ist der Straßenfertiger 2 als Raupenfertiger ausgebildet. Ohne von der erfinderischen Idee abzuweichen, ist der in der Figur 2 dargestellte Straßenfertiger 2 als Radfertiger ausgebildet.

Figur 2 zeigt schematisch ein Stromversorgungsnetz 11, in welchem ein Generator 12 über eine Stromleitung 13 einen elektrischen Verbraucher 14 der Einbaubohle 4 mit Strom versorgt. Außerdem zeigt Figur 2 schematisch in gestrichelter Darstellung ein Netzwerk 15 zur Datenübertragung zwischen der zentralen Bedienvorrichtung 7 sowie einer Funktionskomponente 16, die auf der Einbaubohle 4 angeordnet ist.

Außerdem zeigt Figur 2, dass ein Abschnitt X der Stromleitung 13 zur Datenübertragung im Netzwerk 15 funktional integriert ist. Das Netzwerk 15 nützt daher den Abschnitt X der Stromleitung 13 zur Datenübertragung, wodurch insgesamt die Verkabelung des Netzwerks 15 und des Stromversorgungsnetzes 11 reduziert werden kann.

Figur 3 zeigt in schematischer Darstellung die erfindungsgemäße Kopplung des Netzwerks 15 zur Datenübertragung mit dem Stromversorgungsnetz 11 entlang des Abschnitts X der Stromleitung 13, welcher sowohl zur Stromversorgung der elektrischen Verbraucher 14 auf der Einbaubohle 4, als auch zur Datenübertragung zwischen dem Steuermodul 6 und den Funktionskomponenten 16 auf der Einbaubohle 4 eingesetzt wird. Dies erleichtert insbesondere den Aufbau des Netzwerks 15 zur Datenübertragung, weil dieses zur Datenübertragung auf einen ohnehin auf dem Straßenfertiger 2 vorliegenden Stromleitungsabschnitt X zugreifen kann.

Die auf der Einbaubohle 4 vorgesehenen Funktionskomponenten 16 bilden einen Sender S im Netzwerk 15. Das Steuermodul 6 bildet einen Empfänger E im Netzwerk 15, wobei der Empfänger E mit dem Sender S über einen gestrichelt dargestellten Bus B zur Datenübertragung verbunden ist. Der Bus B umfasst den Abschnitt X der Stromleitung 13 zur Datenübertragung sowie ggf. weitere Datensignalkabel, beispielsweise CAN-Bus-Abschnitte, um andere Einheiten ans Netzwerk anzuschließen.

Die Funktionskomponenten 16 können als zur Einbaubohle 4 gehörende und lösbar an der Einbaubohle 4 befestigbare Anbauteile vorliegen, die je nach Verwendungszweck der Einbaubohle 4 zum Ausführen einer Funktion an der Einbaubohle 4 anbringbar sind. Die Funktionskomponenten 16 sind dazu konfiguriert, jeweils eine bestimmte Anzahl an Betriebsfunktionen an der Einbaubohle 4 durchzuführen. Ferner können die Funktionskomponenten 16 Betriebsparameter während des Betriebs des Straßenfertigers 2 an sich und/oder an anderer Stelle der Einbaubohle 4 erfassen. Zum Erfassen und Verarbeiten der jeweiligen Betriebsparameter enthalten die Funktionskomponenten 16 jeweils mindestens einen Mikroprozessor 17, der dazu ausgebildet ist, mindestens einen Betriebsparameter, welcher durch die Funktionskomponente 16 erfasst wird, als Datensignal auf die durch den Generator 12 als Trägersignal erzeugte Wechselspannung des Stromversorgungsnetzes 11 zu modulieren.

Vom Mikroprozessor 17 aus können die auf den Wechselstrom als Trägersignal aufmodulierten Datensignale über das Netzwerk 15, insbesondere über den Abschnitt X, an das Steuermodul 6 gesendet werden. Basierend darauf kann das Steuermodul 6 über das Netzwerk 15 Steuersignale an die jeweiligen Funktionskomponenten 16 zurück-und/oder an andere Funktionseinheiten des Straßenfertigers 2 senden, um diese anzusteuern. Folglich kann über das Netzwerk 15 eine bidirektionale Kommunikation zwischen dem Steuermodul 6 und den jeweiligen Funktionskomponenten 1 6 auf der Einbaubohle 4 stattfinden.

Figur 4 zeigt in schematisch vergrößerter Darstellung den Mikroprozessor 17. Gemäß Figur 4 umfasst der Mikroprozessor 17 einen Temperatursensor 18, der dazu konfiguriert ist, mindestens eine Betriebstemperatur an der Einbaubohle 4 zu messen. Einer der in Figur 3 dargestellten elektrischen Verbraucher 14 kann bei der Erfindung als Bohlenheizvorrichtung 19 ausgebildet sein. Die Bohlenheizvorrichtung 19 kann beispielsweise eine Vielzahl von Heizstäben umfassen, die zum Erhitzen bestimmter Teile der Einbaubohle 4 vorgesehen sind, damit daran kein Einbaugut kleben bleibt. Der im Mikroprozessor 17 vorgesehene Temperatursensor 18 kann dazu konfiguriert sein, eine Betriebstemperatur der Bohlenheizvorrichtung 19 zu erfassen und diese über das Netzwerk 15 an das Steuermodul 6 weiterzugeben. Dafür kann der Mikroprozessor 17 als Teil einer Heizstabüberwachungseinheit 22 (siehe Figur 3) ausgebildet sein.

Ferner zeigt Figur 4, dass der Mikroprozessor 17 einen Betriebsstundenzähler 20 aufweist. Der Betriebsstundenzähler 20 ist dazu konfiguriert, eine Einsatzzeit an der Funktionskomponente 16 zu erfassen. Weiter kann der Betriebsstundenzähler 20 dazu konfiguriert sein, die Einsatzzeit der jeweiligen Funktionskomponente 16 abzuspeichern, um diese während Instandsetzungsarbeiten der Funktionskomponente 16 für Diagnosezwecke zur Verfügung zu stellen.

Gemäß Figur 4 umfasst der Mikroprozessor 17 auch einen Fehlerspeicher 21, der dafür ausgelegt ist, Fehlermeldungen an der Funktionskomponente 17 abzuspeichern. Der Fehlerspeicher 21 kann auch als separate Komponente auf der Funktionskomponente 16 angeordnet sein. Der Fehlerspeicher 21 liegt insbesondere als RFID-Tag vor, der zu jeder Zeit mittels eines tragbaren Fehlerspeicherlesegeräts für Diagnosezwecke auslesbar ist.

Die Heizstabüberwachungseinheit 22 aus Figur 3 ist dazu konfiguriert, eine Temperatur der Bohlenheizvorrichtung 19, insbesondere der darin verwendeten Heizstäbe zu überwachen. Basierend auf Messungen der Heizstabüberwachungseinheit 22, beispielsweise durch den Temperatursensor 18, kann das Steuermodul 6 vorzugsweise mindestens eine Steuergröße generieren, mittels welcher über einen als Strichpunktlinie dargestellten Datenbus P eine Tamperhubverstelleinheit 23, insbesondere ein Schrittmotor 28 davon, angesteuert werden kann. Die Tamperhubverstelleinheit 23 ist an der Einbaubohle 4 vorgesehen und dazu konfiguriert, einen Hubweg Z einer Tamperleiste 24 einzustellen, um einen bestimmten Verdichtungsgrad im einzubauenden Einbaumaterial zu erhalten.

Ferner ist in der Figur 3 durch einen Doppelpfeil 25 angedeutet, dass das Netzwerk 15 für einen bidirektionalen Datenaustausch konfiguriert ist.

Figur 3 zeigt weiterhin, dass das Netzwerk 15 des Straßenfertigers 2 funktional mit einem externen Netzwerk 26 verbunden ist. Mittels des externen Netzwerks 26 kann der Straßenfertiger 2 insbesondere mit einem anderen Baustellenfahrzeug 27, beispielsweise einem Walzenfahrzeug, für eine Datenübertragung verbunden sein. Vorstellbar wäre es auch, dass der Straßenfertiger 2 über das externe Netzwerk 26 eine Datenverbindung zu einer zentralen Planungsstation 30 aufbauen kann, von wo aus basierend auf der Datenübertragung logistische Materiallieferprozesse und/oder Ersatzteillieferungen für verschlissene oder fehlerhafte Funktionskomponenten 16 koordinierbar sind.

Bei der Erfindung hat der Abschnitt X der Stromleitung 13 eine Doppelfunktion. Einerseits bildet er einen integralen Teil des Stromversorgungsnetzes 11 aus, um die elektrischen Verbraucher 14 auf der Einbaubohle 4 mit elektrischem Strom zu versorgen und andererseits bildet der Abschnitt X einen integralen Teil des Netzwerks 15 zur Datenübertragung zwischen den auf der Einbaubohle 4 angeordneten Funktionskomponenten 16 und dem Steuermodul 6 des Straßenfertigers 2. Der zwischen dem Generator 12 und den elektrischen Verbrauchern 14 mittels der Stromleitung 13 weitergeleitete Wechselstrom dient für das Netzwerk 15 als Trägersignal/Trägerfrequenz für die Datenübertragung. Die mittels des Mikroprozessors 17 erfassten Betriebsparameter der Funktionskomponente 16 werden als Datensignale mit dem Trägersignal synchronisiert, d.h. anhand des Mikroprozessors 17 auf das Trägersignal moduliert und an das Steuermodul 6 entlang des Datenbus B, insbesondere entlang des gemeinsam genutzten Abschnitts X gesendet. Das Steuermodul 6 ist dazu ausgelegt, die empfangenen Datensignale zu demodulieren und gegebenenfalls an einen Bediener anzuzeigen. Optional oder zusätzlich kann das Steuermodul 6 dazu konfiguriert sein, die empfangenen und demodulierten Datensignale für eine Rückkopplungssteuerung von Betriebsparametern an den Funktionskomponenten 16 oder zur Steuerung anderer Funktionskomponenten des Straßenfertigers 2 zu verwenden.

Figur 3 zeigt auch, dass die Bohlenbedienvorrichtung 10 an das Netzwerk 15 zur Datenübertragung angeschlossen sein kann. Dies ist nicht zwingend notwendig, kann jedoch die Funktionalität des Straßenfertigers 2 erhöhen. Insbesondere lassen sich hinsichtlich des Steuermoduls 6 mittels der Bohlenbedienvorrichtung 10 vergleichbare Funktionen durchführen. Dabei erhält die Bohlenbedienvorrichtung 10 über das Netzwerk 15, insbesondere über einen Teil des Abschnitts X Datensignale von den Funktionskomponenten 16 zugesendet.

Die erfinderische Idee, einen Abschnitt einer ohnehin auf dem Straßenfertiger 2 vorliegenden Stromleitung 13 als integralen Teil in einem Netzwerk 15 zur Datenübertragung zu verwenden, lässt sich auch an anderen Baumaschinentypen, insbesondere an einem Beschicker für den Straßenfertiger 2 einsetzen.

## Patentansprüche

1. Baumaschine (1) mit einer Einbaubohle (4) zum Verbau eines Straßenbelags, wobei die Baumaschine (1) ein selbstfahrender Straßenfertiger (2) ist und mindestens eine Stromleitung (13) zur Stromversorgung mindestens eines elektrischen Verbrauchers (14) der Einbaubohle (4) umfasst, und wobei die Baumaschine (1) ein Netzwerk (15) für eine Datenübertragung zwischen mindestens einem im Netzwerk (15) eingebundenen Sender (S) und mindestens einem im Netzwerk (15) eingebundenen Empfänger (E) enthält, **dadurch gekennzeichnet, dass** zumindest ein Abschnitt (X) der Stromleitung (13) in das Netzwerk (15) eingebunden und zur Datenübertragung zwischen dem Sender (S) und dem Empfänger (E) konfiguriert ist.

2. Baumaschine nach Anspruch 1, **dadurch gekennzeichnet, dass** der elektrische Verbraucher (14) eine Bohlenheizvorrichtung (19) der Einbaubohle (4) ist, die über die Stromleitung (13) mit einem Generator (12) der Baumaschine (1) verbunden ist.

3. Baumaschine nach einem der vorangehenden Ansprüche, **dadurch gekennzeichnet, dass** der Sender (S) ein auf der Einbaubohle (4) angeordneter Mikroprozessor (17) ist, der mit dem Abschnitt (X) der Stromleitung (13) verbunden ist und dazu konfiguriert ist, mindestens einen Betriebsparameter der Einbaubohle (4) auf eine Trägerfrequenz zu modulieren und die Trägerfrequenz samt dem aufmodulierten Betriebsparameter über den Abschnitt (X) der Stromleitung (13) an den Empfänger (E) zu senden.

4. Baumaschine nach Anspruch 3, **dadurch gekennzeichnet, dass** der Mikroprozessor (17) an einer zur Einbaubohle (4) gehörenden und lösbar an der Einbaubohle (4) befestigten Funktionskomponente (16) verbaut ist, wobei der Mikroprozessor (17) dazu ausgebildet ist, mindestens einen Betriebsparameter einer Funktionskomponente (16) auf eine Trägerfrequenz zu modulieren und die Trägerfrequenz samt dem aufmodulierten Betriebsparameter über den Abschnitt (X) der Stromleitung (13) an den Empfänger (E) zu senden.

5. Baumaschine nach Anspruch 4, **dadurch gekennzeichnet, dass** der Empfänger (E) dazu konfiguriert ist, die Funktionskomponente (16) zu identifizieren, wenn die Funktionskomponente (16) an der Einbaubohle (4) befestigt ist.

6. Baumaschine nach einem der vorangehenden Ansprüche 3 bis 5, **dadurch gekennzeichnet, dass** der Mikroprozessor (17) über einen Betriebsstundenzähler (20) verfügt, der dazu konfiguriert ist, eine Einsatzzeit des Mikroprozessors (17) und/oder der Einbaubohle (4) aufzuzeichnen.

7. Baumaschine nach einem der vorangehenden Ansprüche 3 bis 6, **dadurch gekennzeichnet, dass** der Mikroprozessor (17) mindestens einen Temperatursensor (18) zum Erfassen einer Betriebstemperatur an der Einbaubohle (4) umfasst.

8. Baumaschine nach einem der vorangehenden Ansprüche 3 bis 7, **dadurch gekennzeichnet, dass** die Einbaubohle (4) eine Heizstabüberwachungseinheit (22) umfasst, in welcher der Mikroprozessor (17) eingebaut ist.

9. Baumaschine nach einem der vorangehenden Ansprüche 3 bis 8, **dadurch gekennzeichnet, dass** der Mikroprozessor (17), ein Zündschlüssel (50) des Straßenfertigers und/oder die Funktionskomponente (16) einen Fehlerspeicher (21) aufweist, wobei der Mikroprozessor (17) dazu ausgebildet ist, eine Fehlfunktion an der Einbaubohle (4) zu erfassen und die Fehlfunktion in dem Fehlerspeicher (21) abzuspeichern.

10. Baumaschine nach einem der vorangehenden Ansprüche 3 bis 9, **dadurch gekennzeichnet, dass** der Fehlerspeicher (21) und/oder Mikroprozessor (17) an der Funktionskomponente (16) auch nach deren Abnehmen von der Einbaubohle (4) stromlos auslesbar ist.

11. Baumaschine nach einem der vorangehenden Ansprüche 3 bis 10, **dadurch gekennzeichnet, dass** das Netzwerk (15) mit einer Tamperhubverstelleinheit (23) verbunden ist, die über das Netzwerk (15) basierend auf mindestens einem Betriebsparameter der Einbaubohle (4) automatisch ansteuerbar ist.

12. Baumaschine nach einem der vorangehenden Ansprüche, **dadurch gekennzeichnet, dass** der Empfänger (E) ein Steuermodul (6) der Baumaschine ist, wobei das Steuermodul (6) eine zentrale Bedienvorrichtung auf einem Bedienstand (5) der Baumaschine (1) oder eine Bohlenbedienvorrichtung (10) ist, die seitlich an der Einbaubohle (4) angeordnet ist.

13. Baumaschine nach Anspruch 12, **dadurch gekennzeichnet, dass** das Netzwerk (15) der Baumaschine (1) zumindest abschnittsweise einen CAN-Bus (B) umfasst, der das Steuermodul (6) zur Datenübertragung mit dem in das Netzwerk (15) eingebundenen Abschnitt (X) der Stromleitung (13) verbindet.

14. Baumaschine nach einem der vorangehenden Ansprüche, **dadurch gekennzeichnet, dass** das Netzwerk (15) der Baumaschine (1) dazu konfiguriert ist, eine Datenverbindung mit einem externen Netzwerk (26) aufzubauen.

15. Baumaschine nach einem der vorangehenden Ansprüche, **dadurch gekennzeichnet, dass** das Netzwerk (15) der Baumaschine (1) für eine bidirektionale oder für eine unidirektionale Datenübertragung (25) ausgelegt ist.

16. Verwendung eines Teils (X) einer Stromleitung (13), die bei einer als selbstfahrender Straßenfertiger (2) ausgebildeten Baumaschine (1) einen elektrischen Verbraucher (14) einer Einbaubohle (4) des Straßenfertigers (2) mit Strom versorgt, als integraler Teil eines Netzwerks (15) zur Datenübertragung zwischen mindestens einem im Netzwerk (15) eingebundenen Sender (S) und mindestens einem im Netzwerk (15) eingebundenen Empfänger (E).

## Claims

1. Construction machine (1) with a paving screed (4) for the installation of a road surface, whereby the construction machine (1) is a self-propelled road paver (2) and comprises at least one power line (13) for the power supply of at least one electric consumer (14) of the paving screed (4), and whereby the construction machine (1) contains at least one network (15) for data transmission between at least one sender (S) integrated in the network (15) and at least one receiver (E) integrated in the network (15), **characterized by the condition** that at least one section (X) of the power line (13) is integrated in the network (15) and configured for data transmission between the sender (S) and the receiver (E).

2. Construction machine according to Claim 1, **characterized by the condition** that the electric consumer (14) is a paving screed heating device (19) of the paving screed (4) that is connected to a generator (12) of the construction machine (1) through the power line (13).

3. Construction machine according to one of the preceding claims, **characterized by the condition** that the sender (S) is a microprocessor (17) that is disposed on the paving screed (4), connected to the section (X) of the power line (13) and configured to modulate at least one operating parameter of the paving screed (4) to a carrier frequency and to send the carrier frequency including the operating parameter modulated to it to the receiver (E) through the section (X) of the power line (13).

4. Construction machine according to Claim 3, **characterized by the condition** that the microprocessor (17) is installed on a functional component (16) that belongs to the paving screed (4) and that is detachably fastened on the paving screed (4), whereby the microprocessor (17) is formed to modulate at least one operating parameter of a functional component (16) to a carrier frequency and to send the carrier frequency including the operating parameter modulated to it to the receiver (E) through the section (X) of the power line (13).

5. Construction machine according to Claim 4, **characterized by the condition** that the receiver (E) is configured to identify the functional component (16) when the functional component (16) is fastened on the paving screed (4).

6. Construction machine according to one of the preceding Claims 3 to 5, **characterized by the condition** that the microprocessor (17) has an operating hour counter (20) that is configured to record an operating time of the microprocessor (17) and/or of the paving screed (4).

7. Construction machine according to one of the preceding Claims 3 to 6, **characterized by the condition** that the microprocessor (17) comprises at least one temperature sensor (18) to record an operating temperature on the paving screed (4).

8. Construction machine according to one of the preceding Claims 3 to 7, **characterized by the condition** that the paving screed (4) comprises a heating bar monitoring unit (22) in which the microprocessor (17) is installed.

9. Construction machine according to one of the preceding Claims 3 to 8, **characterized by the condition** that the microprocessor (17), an ignition key (50) of the road paver and/or the functional component (16) have an error memory (21), whereby the microprocessor (17) is formed to record a malfunction on the paving screed (4) and to save the malfunction in an error memory (21).

10. Construction machine according to one of the preceding Claims 3 to 9, **characterized by the condition** that the error memory (21) and/or the microprocessor (17) on the functional component (16) can be read out in a currentless way even after removal of the functional component from the paving screed (4).

11. Construction machine according to one of the preceding Claims 3 to 10, **characterized by the condition** that the network (15) is connected to a tamper stroke adjustment unit (23) that can be activated automatically through the network (15) based on at least one operating parameter of the paving screed (4).

12. Construction machine according to one of the preceding claims, **characterized by the condition** that the receiver (E) is a control module (6) of the construction machine, whereby the control module (6) is a central operating device on an operating stand (5) of the construction machine (1) or a paving screed operating device (10) that is disposed laterally on the paving screed (4).

13. Construction machine according to Claim 12, **characterized by the condition** that the network (15) of the construction machine (1) comprises a CAN bus (B) at least in a sectional way that connects the control module (6) for data transmission with the section (X) of the power line (13) that is integrated in the network (15).

14. Construction machine according to one of the preceding claims, **characterized by the condition** that the network (15) of the construction machine (1) is configured to establish a data connection with an external network (26).

15. Construction machine according to one of the preceding claims, **characterized by the condition** that the network (15) of the construction machine (1) is designed for bidirectional or for unidirectional data transmission (25).

16. Use of a cable section (X) of a power line (13) that supplies, in case of a construction machine (1) that is formed as a self-propelled road paver (2), an electric consumer (14) of a paving screed (4) of the road paver (2) with electricity, as an integral part of a network (15) for data transmission between at least one sender (S) integrated in the network (15) and at least one receiver (E) integrated in the network (15).

## Revendications

1. Engin de travaux publics (1) avec une table de pose (4) pour assurer la pose d'un revêtement routier, l'engin de travaux publics (1) étant un finisseur de route (2) automoteur et comprenant au moins une ligne électrique (13) pour l'alimentation en courant d'au moins un consommateur électrique (14) de la table de pose (4), et l'engin de travaux publics (1) renfermant au moins un réseau (15) pour une transmission de données entre au moins un émetteur (S) intégré au réseau (15) et au moins un récepteur (E) intégré au réseau (15), **caractérisé en ce qu'**au moins un tronçon (X) de la ligne électrique (13) est intégré au réseau (15) et est configuré pour la transmission de données entre l'émetteur (S) et le récepteur (E).

2. Engin de travaux publics selon la revendication 1, **caractérisé en ce que** le consommateur électrique (14) est un dispositif de chauffage de table (19) de la table de pose (4), qui est relié à un générateur (12) de l'engin de travaux publics (1) par l'intermédiaire de la ligne électrique (13).

3. Engin de travaux publics selon l'une des revendications précédentes, **caractérisé en ce que** l'émetteur (S) est un microprocesseur (17), qui est agencé sur la table de pose (4), est relié au tronçon (X) de la ligne électrique (13), et est configuré pour assurer la modulation d'un paramètre de fonctionnement de la table de pose (4) sur une fréquence porteuse, et envoyer la fréquence porteuse, y compris le paramètre de fonctionnement y ayant été modulé, au récepteur (E), par l'intermédiaire du tronçon (X) de la ligne électrique (13).

4. Engin de travaux publics selon la revendication 3, **caractérisé en ce que** le microprocesseur (17) est monté sur un composant fonctionnel (16) faisant partie de la table de pose (4) et fixé de manière amovible sur la table de pose (4), le microprocesseur (17) étant configuré pour assurer la modulation d'au moins un paramètre de fonctionnement d'un composant fonctionnel (16) sur une fréquence porteuse, et envoyer la fréquence porteuse, y compris le paramètre de fonctionnement y ayant été modulé, au récepteur (E), par l'intermédiaire du tronçon (X) de la ligne électrique (13).

5. Engin de travaux publics selon la revendication 4, **caractérisé en ce que** le récepteur (E) est configuré pour identifier le composant fonctionnel (16) lorsque le composant fonctionnel (16) est fixé à la table de pose (4).

6. Engin de travaux publics selon l'une des revendications précédentes 3 à 5, **caractérisé en ce que** le microprocesseur (17) dispose d'un compteur de nombre d'heures de fonctionnement (20), qui est configuré pour enregistrer la durée d'utilisation du microprocesseur (17) et/ou de la table de pose (4).

7. Engin de travaux publics selon l'une des revendications précédentes 3 à 6, **caractérisé en ce que** le microprocesseur (17) comprend au moins un capteur de température (18) destiné à relever une température de fonctionnement au niveau de la table de pose (4).

8. Engin de travaux publics selon l'une des revendications précédentes 3 à 7, **caractérisé en ce que** la table de pose (4) comprend une unité de surveillance de barreau chauffant (22) dans lequel est intégré le microprocesseur (17).

9. Engin de travaux publics selon l'une des revendications précédentes, **caractérisé en ce que** le microprocesseur (17), une clé de démarrage (50) du finisseur de route et/ou le composant fonctionnel (16) comprend une mémoire de défauts (21), le microprocesseur (17) étant conçu pour relever un fonctionnement défectueux sur la table de pose (4) et mémoriser le fonctionnement défectueux dans la mémoire de défauts (21).

10. Engin de travaux publics selon l'une des revendications précédentes 3 à 9, **caractérisé en ce que** la mémoire de défauts (21) et/ou le microprocesseur (17) sur le composant fonctionnel (16) peuvent être lus également hors tension après avoir été retirés de la table de pose (4).

11. Engin de travaux publics selon l'une des revendications précédentes 3 à 10, **caractérisé en ce que** le réseau (15) est relié à une unité de réglage de la course de damage (23), qui peut être commandée automatiquement par l'intermédiaire du réseau (15) en se fondant sur au moins un paramètre de fonctionnement de la table de pose (4).

12. Engin de travaux publics selon l'une des revendications précédentes, **caractérisé en ce que** le récepteur (E) est un module de commande (6) de l'engin de travaux publics, le module de commande (6) étant un dispositif de commande centralisé sur un pupitre de commande (5) de l'engin de travaux publics (1), ou bien un dispositif de commande de table (10), qui est agencé latéralement sur la table de pose (4).

13. Engin de travaux publics selon la revendication 12, **caractérisé en ce que** le réseau (15) de l'engin de travaux publics (1) comprend au moins par secteurs, un bus CAN (B), qui, pour la transmission de données, relie le module de commande (6) au tronçon (X) de la ligne électrique (13) intégré au réseau (15).

14. Engin de travaux publics selon l'une des revendications précédentes, **caractérisé en ce que** le réseau (15) de l'engin de travaux publics (1) est configuré pour établir une liaison de données avec un réseau externe (26).

15. Engin de travaux publics selon l'une des revendications précédentes, **caractérisé en ce que** le réseau (15) de l'engin de travaux publics (1) est conçu pour une transmission de données (25) bidirectionnelle ou unidirectionnelle.

16. Utilisation d'une partie (X) d'une ligne électrique (13), qui, dans un engin de travaux publics (1) réalisé sous forme de finisseur de route (2) automoteur, alimente en courant un consommateur électrique (14) d'une table de pose (4) du finisseur de route (2), en tant que partie intégrante d'un réseau (15) pour la transmission de données entre au moins un émetteur (S) intégré au réseau (15) et au moins un récepteur (E) intégré au réseau (15).
